# EUROPEAN PATENT SPECIFICATION

(11) **EP 2 612 780 B1**
(45) Date of publication and mention of the grant of the patent: **24.09.2014**
(21) Application number: 12158031.0
(22) Date of filing: 05.03.2012
(51) Int. Cl.: B60K 37/02, B60K 35/00, B60R 11/04

(54) **Method for assembling a display device and display device**
Verfahren zur Montage einer Anzeigevorrichtung und Anzeigevorrichtung
Procédé d'assemblage d'un dispositif d'affichage et dispositif d'affichage

(30) Priority: 07.01.2012 DE 102012000178
(43) Date of publication of application: 10.07.2013
(73) Proprietor: Johnson Controls Automotive Electronics SAS, 95892 Cergy-Pontoise Cedex (FR)
(72) Inventor: Henon, Fabrice, 95800 Cergy-Pontoise (FR); Tzankov, Boyan, 1421 Sofia (BG); Kolimechkov, Georgi, 1582 Sofia (BG)
(74) Representative: Liedtke, Markus

(56) References cited:
- EP-A1- 1 752 819
- EP-A2- 1 013 496
- FR-A1- 2 794 273
- US-A1- 2005 068 747

## Description

The invention relates to a method for assembling a display device according to the preamble of claim 1. Further the invention relates to a display device according to the preamble of claim 5.

Display devices for vehicles include a plurality of components, for example an indicator scale and a display unit, in particular a LCD or TFT display unit, which are arranged on a printed circuit board or to a housing. The assembly of such display devices requires a large number of assembly steps.

DE 100 10 749 A1 discloses an instrument panel arrangement for vehicle, especially motor vehicle, and a method for assembling an instrument panel arrangement. The instrument panel arrangement has a cross-bearer on which a panel is held by at least one holding device. The panel is fixed to the vehicle by connecting arrangements on both sides. Holding devices mounted on the panel at both longitudinal ends are associated with holding devices on the cross-bearer, preferably at its ends. The connecting devices are preferably separate connecting blocks that can be aligned longitudinally and/or vertically.

Further, EP 1 013 496 A2 and US 2005/0068747 A1 disclose display device which comprises different components, such as display units and lens wherein the components of the display device are successively assembled from one side.

It is an object of the present invention to provide an improved method for assembling a display device and an improved display device according to the prior art.

The object is achieved by a method according to claim 1 and by a display device according to claim 5.

Preferred embodiments of the invention are given in the dependent claims.

According to the invention, a method for assembling a display device for a vehicle, wherein a display unit is arranged on a visible side of a housing of the display device comprises the following steps:
- arranging a lens in front of the display unit,
- connecting the lens to the housing in a positive locking and/or non-positive locking manner,
- rotating the display device up with a rear side and
- connecting the display unit to the housing in a non-positive locking manner from the rear side of the display device.

By assembling the lens before rotating the display device, the display unit is prevented from falling down which could cause a damage of the display unit. Further, by rotating the display device the connection of the display unit is made possible from above and thus can be preformed more comfortable.

Preferably, the lens is connected to the housing by a latching connection. A latching connection is a quick fastening mechanism that provides a robust holding.

In an exemplary embodiment, the display unit is screwed to the housing. With this, the display unit is fixed optimally to the housing.

Preferably, a printed circuit board is provided that will be connected to the housing and the display unit in a non-positive locking manner. Preferably, the screwing connection of the display unit and the housing can be used for the connection of the printed circuit board. For operation of the display device the display unit is electrically contacted with the printed circuit board.

According to the invention a display device with a display unit that is arranged on a visible side of a housing of the display device provides a lens that is arranged in front of the display unit, whereby the lens is connected to the housing by at least one latching connection.

With this a display device is provided that can be assembled in a comfortable way.

In a preferred embodiment of the invention, the latching connection comprises a sleeve with at least one latching lug having an inclined surface on a free end. Further, the latching connection comprises at least one corresponding flexible arm arranged on a lens housing. This provides a robust latching connection that is easy to manufacture and that can be performed very fast.

In a further preferred embodiment of the invention the lens comprises at least one indicating symbol that is arranged above the sleeve of the latching connection according to a view direction of the display device. Due to the fact that the housing comprises an indicating scale and a number of symbols arranged around the indicating scale, the room for adding further symbols is limited. The lens is visible for a user in a good way so that adding further symbols to the lens enables a comfortable design for indicating relevant data by symbols, e.g. parameters, control- and/or regulating variables, warnings, for vehicle use and/or for operation of a vehicle assistant system.

For illuminating the further symbol a light source is arranged on an end of the sleeve that is faced away from the symbol. Hence, the light source is arranged on the printed circuit board, whereby the sleeve is arranged over the light source. With this the latching connection can be also used for illuminating the symbol.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitive of the present invention, and wherein:
- Figure 1: shows schematically a perspective view of a visible side of a display device having a housing with an indicating scale and a number of symbols, and a display unit,
- Figure 2: shows schematically a perspective view of the visible side of the display device during an assembly step, wherein a lens is arranged in front of the display unit according to a view direction of the display device and connected to the housing by two latching connections,
- Figure 3: shows a perspective view of the visible side of the display device with the display unit after assembly of the lens,
- Figure 4: shows a perspective sectional view of the latching connection of the display device,
- Figure 5: shows a detail from the perspective sectional view of figure 4,
- Figure 6: shows a perspective view of a rear side of the display device with screws for fixing the display unit to a printed circuit board and the housing,
- Figure 7: shows a perspective view of the visible side of the display device with the display unit after assembly of the lens, whereby the lens includes two further symbols,
- Figure 8: shows a perspective sectional view of the latching connection of the display device with one of the further symbols arranged on the visible side of the lens and
- Figure 9: shows a perspective view of the lens with the lens housing and the further symbols.

Corresponding parts are marked with the same reference symbols in all figures.

### Detailed Description of Preferred Embodiments

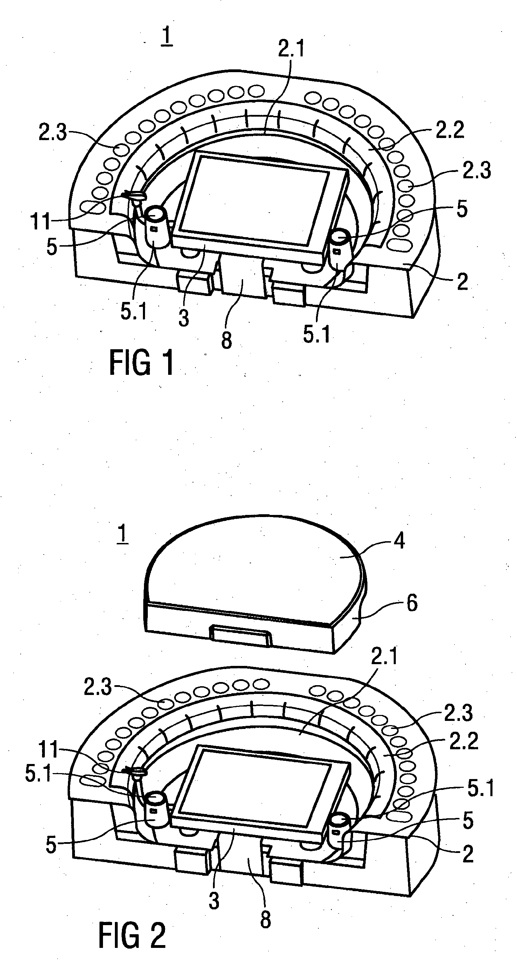

**Figure 1** shows a perspective view of a visible side of a display device 1, wherein the visible side is faced upwards according to a view direction of the display device 1.

The display device 1 is designed as a part-circle and having a housing 2, a pointer element 11 and a display unit 3 that are designed as a conventional liquid crystal display (LCD) or as a thin film transistor display (TFT display). The housing 2 comprises a recess 2.1 centrally arranged and formed as a part circle. At a margin area of the recess 2.1 an indicating scale 2.2 is arranged.

In the present embodiment, the indicating scale 2.2 is designed as an analogue display element of a conventional speed indicator. The indicating scale 2.2 is coupled to the pointer element 11 that is pivoted along the indicating scale 2.2 dependent on a value to display the speed of the vehicle or alternatively, another measure variable, e.g. a rotational speed of the engine of the vehicle and/or a coolant temperature, a lubricant temperature or fuel level.

Around the indicating scale 2.2 a number of illuminated symbols 2.3 are arranged. The symbols 2.3 can display relevant data, e.g. parameters, control- and/or regulating variables, warnings, for vehicle use and/or for operation of a vehicle assistant system.

**Figure 2** shows a perspective view of the visible side of the display device 1 during an assembly step.

The assembly step includes placing a lens 4 on the visible side of the display device 1 in front of the display unit 3 and connecting the lens 4 with the housing 2 by two latching connections 5 in such a manner that the display unit 3 is fixed between a visible side of the housing 2 and the lens 4. The visible side of the housing 2 is faced upwards according to a view direction of the display device 1.

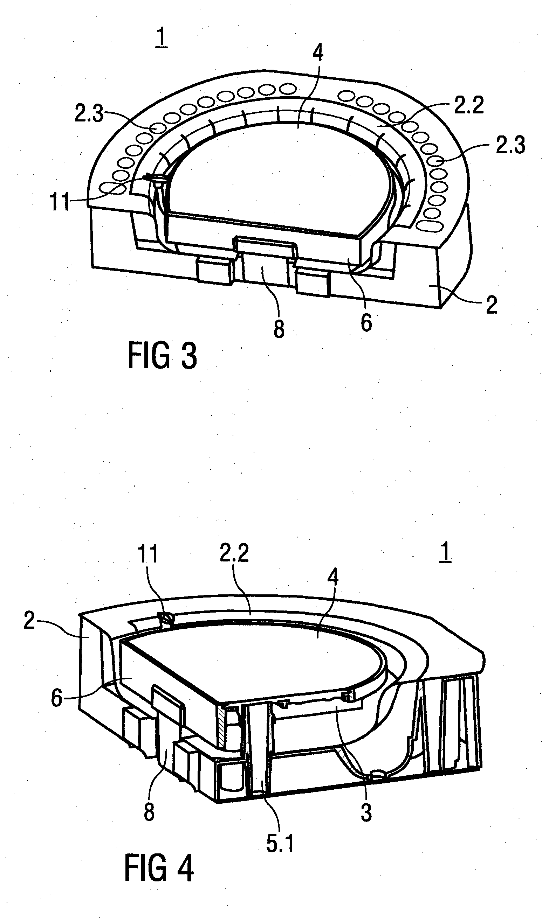

**Figure 3** shows a perspective view of the visible side of the display device 1 after the assembly of the lens 4 described in figure 3. As can be seen in the present embodiment the lens 4 comprises a lens housing 6 in which the display unit 3 is fixed laterally.

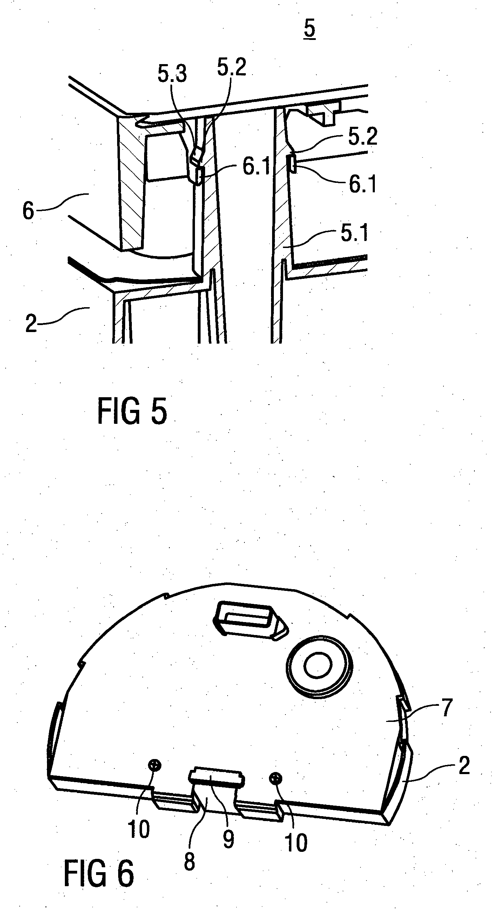

**Figure 4** shows a perspective sectional view of one of the latching connections 5 of the display device 1 and **figure 5** shows a detailed view of the perspective sectional view of figure 4.

The latching connection 5 comprises a sleeve 5.1 that is arranged on the housing 2 or formed integrally with the housing 2. According to the present embodiment the sleeve 5.1 comprises two latching lugs 5.2 respectively designed with inclined surfaces 5.3 arranged on their free ends. Alternatively, the sleeve 5.1 can comprise one latching lug 5.2 or more than two latching lugs 5.2.

For realization of the latching connection the lens housing 6 comprises a corresponding number of flexible latching arms 6.1, which when assembling the lens 4 are guided over the inclined surfaces 5.3 of the locking lugs 5.2 and are deformed radially outwards with respect to the sleeve 5.1 by the latching lugs 5.2.

After passing the latching lugs 5.2 the flexible latching arms 6.1 will be snapped radially inwards with respect to the sleeve 5.1 and hence, engaging the lens housing 6 with the sleeve 5.1.

The display device 1 with the display unit 3 fixed as described above is then rotated upwards at a rear side according to a view direction of the display device 1.

**Figure 6** shows a perspective view of the rear side of the display device 1 at which a printed circuit 7 is arranged. The display unit 3 is electrically contacted with the printed circuit board 7 by a conductor strip 8 and a connector 9.

The display unit 3 is connected to the printed circuit board 7 and the housing 2 by two screws 10. For this, the screws 10 are screwed into the display unit 3 through bore holes arranged in the printed circuit board 7 and the housing 2.

According to alternative embodiment it can be provided a smaller or larger number of screws 10 as described above.

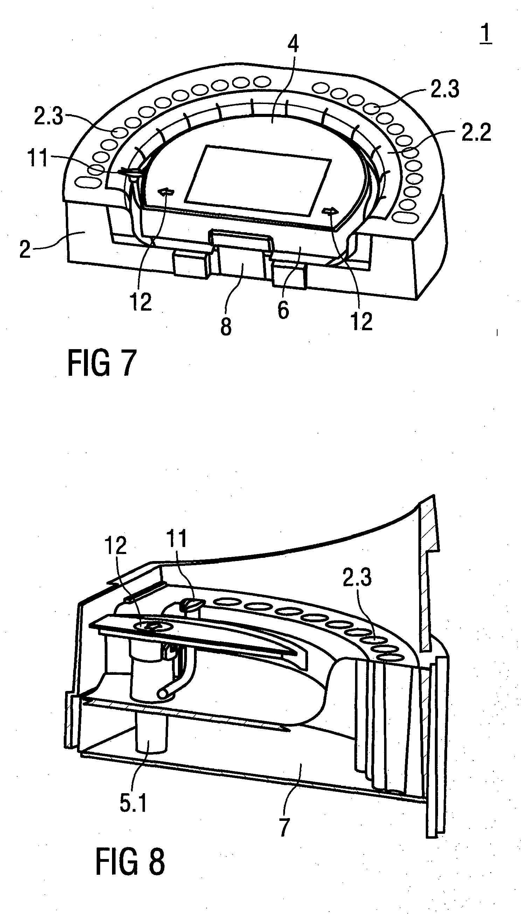

**Figure 7** shows a perspective view of the visible side of the display device 1 with the display unit 3 after assembly of the lens 4.

The lens 4 includes an opening and/or a transparent section corresponding to dimensions of the display unit 3. According to the invention, the lens 4 includes two further symbols 12 arranged on a visible side of the lens 4 next to the opening and/or transparent section. In the present embodiment, the further symbols 12 are designed as direction indicators.

The further symbols 12 are formed by transparent sections. For example, the lens 4 is made by a transparent material and covered by a colored, light-proofed film that comprises notches corresponding to the dimensions of the display unit 3 and the form of the further symbols 12.

The further symbols 12 are illuminated by light sources (not shown) arranged within the housing 2 and/or electrically connected with the printed circuit board 7. Therefore, the symbols 12 are arranged above the latching connections 5 according to a view direction of the display device 1, as illustrated in more detail in figure 8.

**Figure 8** shows a perspective sectional view of the latching connection 5 of the display device with one of the further symbols 2.3.

A not shown light source is arranged on the printed circuit board 7, whereby the sleeve 5.1 is arranged above the light source. Thus, the light of the light source can illuminate the further symbol 12. Moreover, the sleeve 5.1 ensures that the light of the light source only illuminates the further symbol 12. With this, other illuminated symbols or elements are not influenced by the light source. At the same time, the further symbol 12 is not influenced by other light sources.

Preferably the light source is formed by one or more light emission diodes (LED) that provide an energy saving operation of the display device 1.

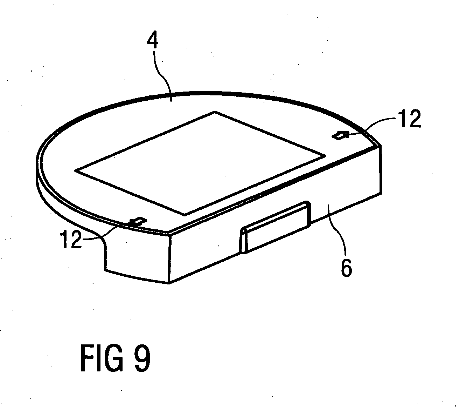

**Figure 9** shows a perspective view of the lens 4 with the lens housing 6 and the further symbols 12. The lens housing 6 comprises an extended margin area 6.2 projecting downwards according to the view direction of the display device 1. The extended margin area 6.2 is suitable for hiding the sleeve 5.1.

### List of References

- 1: display device
- 2: housing
- 2.1: recess
- 2.2: indicating scale
- 2.3: symbols
- 3: display unit
- 4: lens
- 5: latching connections
- 5.1: sleeve
- 5.2: latching lugs
- 5.3: inclined surfaces
- 6: lens housing
- 6.1: latching arms
- 6.2: extended margin area
- 7: printed circuit board
- 8: conductor strip
- 9: connector
- 10: screws
- 11: pointer element
- 12: further symbols

## Claims

1. Method for assembling a display device (1) for a vehicle, wherein a display unit (3) is arranged on a visible side of a housing (2) of the display device (1),
**characterized by**
- arranging a lens (4) in front of the display unit (3),
- connecting the lens (4) to the housing (2) in a positive locking and/or non-positive locking manner,
- rotating the display device (1) up with its rear side and
- connecting the display unit (3) to the housing (2) in a non-positive locking manner from the rear side of the display device (1).

2. Method according to claim 1,
**characterized in that** the lens (4) is connected to the housing (2) by a latching connection (5).

3. Method according to claim 1 or 2,
**characterized in that** the display unit (3) is screwed to the housing (2).

4. Method according to claim 3
**characterized in that** a printed circuit board (7) is connected to the housing (2) and the display unit (3) in a non-positive locking manner.

5. Display device (1) with a display unit (3) that is arranged on a visible side of a housing (2) of the display device (1),
**characterized in that** a lens (4) is arranged in front of the display unit (3), whereby the lens (4) is connected to the housing (2) by at least one latching connection (5) and the display unit (3) is connected to the housing (2) in a non-positive locking manner from the rear side of the display device (1) after the lens (4) is connected.

6. Display device (1) according to claim 5,
**characterized in that** the latching connection (5) comprises a sleeve (5.1) with at least one latching lug (5.2) having an inclined surface (5.3) on a free end.

7. Display device (1) according to claim 6,
**characterized in that** the latching connection (5) comprises at least one corresponding flexible arm (6.1) arranged on a lens housing (6).

8. Display device (1) according to one of the claims 5 to 7,
**characterized in that** the lens (4) comprises at least one indicating symbol (12) that is arranged above the sleeve (5.1) of the latching connection (5).

9. Display device (1) according to claim 8,
**characterized in that** a light source is arranged on an end of the sleeve (5.1) faced away from the symbol (12) in order to illuminate the symbol (12).

## Patentansprüche

1. Verfahren zur Montage einer Anzeigevorrichtung (1) für ein Fahrzeug, wobei eine Anzeigeeinheit (3) auf einer sichtbaren Seite eines Gehäuses (2) der Anzeigevorrichtung (1) angeordnet ist, **gekennzeichnet durch**
- Anordnen einer Linse (4) vor der Anzeigeeinheit (3),
- Verbinden der Linse (4) mit dem Gehäuse (2) in einer formschlüssigen und/oder kraftschlüssigen Weise,
- Drehen der Anzeigevorrichtung (1) mit ihrer Rückseite nach oben und
- Verbinden der Anzeigeeinheit (3) mit dem Gehäuse (2) in kraftschlüssiger Weise von der Rückseite der Anzeigevorrichtung (1).

2. Verfahren nach Anspruch 1,
**dadurch gekennzeichnet, dass** die Linse (4) mit dem Gehäuse (2) durch eine Rastverbindung (5) verbunden wird.

3. Verfahren nach Anspruch 1 oder 2,
**dadurch gekennzeichnet, dass** die Anzeigeinheit (3) an das Gehäuse (2) geschraubt wird.

4. Verfahren nach Anspruch 3,
**dadurch gekennzeichnet, dass** eine gedruckte Leiterplatte (7) mit dem Gehäuse (2) und der Anzeigeeinheit (3) in kraftschlüssiger Weise verbunden wird.

5. Anzeigevorrichtung (1) mit einer Anzeigeeinheit (3), die auf einer sichtbaren Seite eines Gehäuses (2) der Anzeigevorrichtung (1) angeordnet ist,
**dadurch gekennzeichnet, dass** eine Linse (4) vor der Anzeigeeinheit (3) angeordnet ist, wobei die Linse (4) mit dem Gehäuse (2) durch mindestens eine Rastverbindung (5) verbunden und die Anzeigeeinheit (3) mit dem Gehäuse (2) von der Rückseite der Anzeigevorrichtung (1) in kraftschlüssiger Weise verbunden wird, nachdem die Linse (4) verbunden worden ist.

6. Anzeigevorrichtung (1) nach Anspruch 5,
**dadurch gekennzeichnet, dass** die Rastverbindung (5) eine Hülse (5.1) mit mindestens einem Rastvorsprung (5.2) umfasst, die eine geneigte Oberfläche (5.3) an einem freien Ende aufweist.

7. Anzeigevorrichtung (1) nach Anspruch 6,
**dadurch gekennzeichnet, dass** die Rastverbindung (5) mindestens einen entsprechenden flexiblen Arm (6.1) umfasst, der an einem Linsengehäuse (6) angeordnet ist.

8. Anzeigevorrichtung (1) nach einem der Ansprüche 5 bis 7,
**dadurch gekennzeichnet, dass** die Linse (4) mindestens ein Anzeigesymbol (12) umfasst, das über der Hülse (5.1) der Rastverbindung (5) angeordnet ist.

9. Anzeigevorrichtung (1) nach Anspruch 8,
**dadurch gekennzeichnet, dass** eine Lichtquelle an einem Ende der Hülse (5.1) von dem Symbol (12) abgewandt angeordnet ist, um das Symbol (12) zu erleuchten.

## Revendications

1. Procédé d'assemblage d'un dispositif d'affichage (1) pour un véhicule, une unité d'affichage (3) étant disposée sur un côté visible d'un boîtier (2) du dispositif d'affichage (1),
**caractérisé par** les étapes suivantes :
- disposer une lentille (4) devant l'unité d'affichage (3),
- raccorder la lentille (4) au boîtier (2) par verrouillage positif et/ou verrouillage non positif,
- faire tourner le dispositif d'affichage (1) vers le haut par son côté arrière et
- raccorder l'unité d'affichage (3) au boîtier (2) par verrouillage non positif depuis le côté arrière du dispositif d'affichage (1).

2. Procédé selon la revendication 1,
**caractérisé en ce que** la lentille (4) est raccordée au boîtier (2) par un élément de raccordement bloquant (5).

3. Procédé selon la revendication 1 ou 2,
**caractérisé en ce que** l'unité d'affichage (3) est vissée au boîtier (2).

4. Procédé selon la revendication 3,
**caractérisé en ce qu'**une plaquette de circuit imprimé (7) est raccordée au boîtier (2) et à l'unité d'affichage (3) par verrouillage non positif.

5. Dispositif d'affichage (1) comportant une unité d'affichage (3) qui est disposée sur un côté visible d'un boîtier (2) du dispositif d'affichage (1),
**caractérisé en ce qu'**une lentille (4) est disposée devant l'unité d'affichage (3), la lentille (4) étant raccordée au boîtier (2) par le biais d'au moins un élément de raccordement bloquant (5) et l'unité d'affichage (3) étant raccordée au boîtier (2) par verrouillage non positif depuis le côté arrière du dispositif d'affichage (1) une fois la lentille (4) raccordée.

6. Dispositif d'affichage (1) selon la revendication 5,
**caractérisé en ce que** l'élément de raccordement bloquant (5) comprend une douille (5.1) dotée d'au moins une protubérance de blocage (5.2) comportant une surface inclinée (5.3) à une extrémité libre.

7. Dispositif d'affichage (1) selon la revendication 6,
**caractérisé en ce que** l'élément de raccordement bloquant (5) comprend au moins un bras flexible correspondant (6.1) disposé sur un boîtier de lentille (6).

8. Dispositif d'affichage (1) selon l'une des revendications 5 à 7,
**caractérisé en ce que** la lentille (4) comprend au moins un symbole indicateur (12) disposé au-dessus de la douille (5.1) de l'élément de raccordement bloquant (5).

9. Dispositif d'affichage (1) selon la revendication 8, **caractérisé en ce qu'**une source de lumière est disposée sur une extrémité de la douille (5.1) orientée à l'opposé du symbole (12) de façon à illuminer le symbole (12).
